# EUROPEAN PATENT APPLICATION

(11) **EP 4 503 597 A1**
(43) Date of publication of application: **05.02.2025**
(21) Application number: 22935168.9
(22) Date of filing: 29.03.2022
(51) Int. Cl.: H04N 7/18

(54) **IMAGE GENERATION DEVICE, IMAGE REPRODUCTION DEVICE, IMAGE GENERATION METHOD, AND PROGRAM**

(71) Applicant: Sony Interactive Entertainment Inc., Tokyo 108-0075 (JP)
(72) Inventor: TOKUNAGA, Nodoka, Tokyo 108-0075 (JP); MATSUNAGA, Kiyobumi, Tokyo 108-0075 (JP); FUJIHARA, Masahiro, Tokyo 108-0075 (JP); TAKASE, Masaki, Tokyo 108-0075 (JP)
(74) Representative: D Young & Co LLP
(86) International application number: PCT/JP2022/015597
(87) International publication number: WO 2023/188020

(57) **Abstract**

Provided is an image generation apparatus configured to generate, on the basis of scene information, image data representing a part of a scene represented by the scene information, as display-use image data, determine, as a recording target, a part that is at least a part of the scene and at least partially overlaps with the display-use image data, and generate, as recording-use image data, image data regarding a part that is at least a part of the scene and has been determined as the recording target. The recording-use image data generated is subjected to predetermined reproduction processing.

## Description

### [Technical Field]

The present invention relates to an image generation apparatus configured to generate an image to be displayed on a display apparatus, an image reproduction apparatus configured to reproduce an image, an image generation method, and a program.

### [Background Art]

For example, in video games or the like, an image generation apparatus repeatedly executes processing of generating an image depicting the state of a virtual space or the like and displaying the generated image on a screen of a display apparatus, thereby presenting a video to the user. At this time, in some cases, the image generation apparatus records the content of the video generated for display, in order to make the video available to third parties later, for example.

### [Summary]

### [Technical Problems]

In the related art described above, the content of the video generated for display changes according to the content of instructions from the user. Further, in a case where a video is displayed on a head-mounted display apparatus, in particular, the image generation apparatus may change the video to be displayed on the display apparatus, in conjunction with changes in the orientation of the face of the user. In a case where a video that changes in real-time according to the user's instruction content and face orientation in this way is recorded and another viewer watches the recorded video later, the recorded video may change unexpectedly for the viewer or make the viewer feel motion sickness. Thus, the video generated for display and recorded as it is does not necessarily serve as a video suitable for later watching.

The present invention has been made in consideration of the above-mentioned circumstances, and it is one object thereof to provide an image generation apparatus, an image reproduction apparatus, an image generation method, and a program that make it possible to reproduce the content generated in real-time and displayed as a video, in a form that is easy to watch later.

### [Solution to Problems]

An image generation apparatus according to one aspect of the present invention is an image generation apparatus including a display-use image generation unit configured to generate, on the basis of scene information, image data representing a part of a scene represented by the scene information, as display-use image data, a determination unit configured to determine, as a recording target, a part that is at least a part of the scene and at least partially overlaps with the display-use image data, and a recording-use image generation unit configured to generate, as recording-use image data, image data regarding a part that is at least a part of the scene and has been determined as the recording target, in which the recording-use image data generated is subjected to predetermined reproduction processing.

An image reproduction apparatus according to one aspect of the present invention is an image reproduction apparatus including a recording-use image data reception unit configured to receive recording-use image data generated on the basis of scene information together with display-use image data representing a part of a scene represented by the scene information, the recording-use image data including a part that is at least a part of the scene and corresponds to the display-use image data, and a reproduction unit configured to reproduce the recording-use image data received by the recording-use image data reception unit, in which the reproduction unit acquires field-of-view information regarding a field of view of a viewer who watches a video obtained by reproducing the recording-use image data, and extracts and displays at least a part of the recording-use image data on the basis of the field-of-view information.

An image generation method according to one aspect of the present invention is an image generation method including a step of generating, on the basis of scene information, image data representing a part of a scene represented by the scene information, as display-use image data, a step of determining, as a recording target, a part that is at least a part of the scene and at least partially overlaps with the display-use image data, and a step of generating, as recording-use image data, image data regarding a part that is at least a part of the scene and has been determined as the recording target, in which the recording-use image data generated is subjected to predetermined reproduction processing.

A program according to one aspect of the present invention is a program for causing a computer to execute a step of generating, on the basis of scene information, image data representing a part of a scene represented by the scene information, as display-use image data, a step of determining, as a recording target, a part that is at least a part of the scene and at least partially overlaps with the display-use image data, and a step of generating, as recording-use image data, image data regarding a part that is at least a part of the scene and has been determined as the recording target, in which the recording-use image data generated is subjected to predetermined reproduction processing. This program may be stored in a computer-readable non-transitory information storage medium to be provided.

### [Brief Description of Drawings]

[FIG. 1]

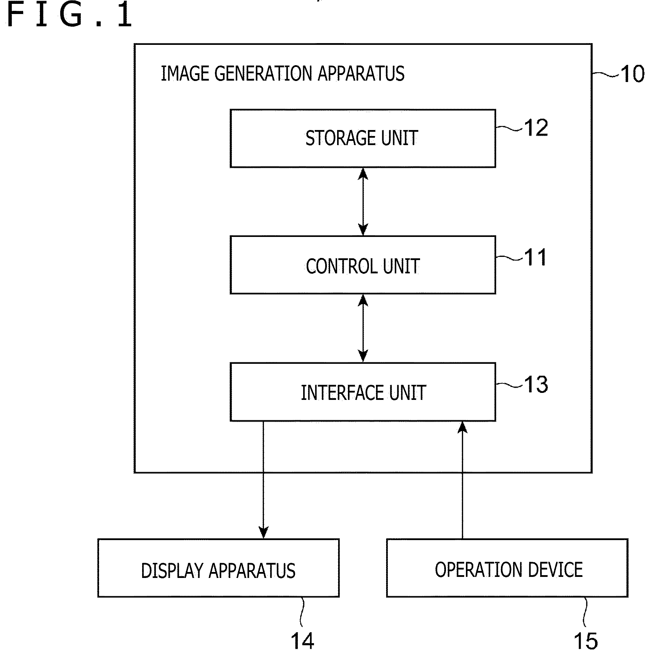

   FIG. 1 is a configuration block diagram illustrating a configuration of an image generation apparatus according to an embodiment of the present invention.
[FIG. 2]

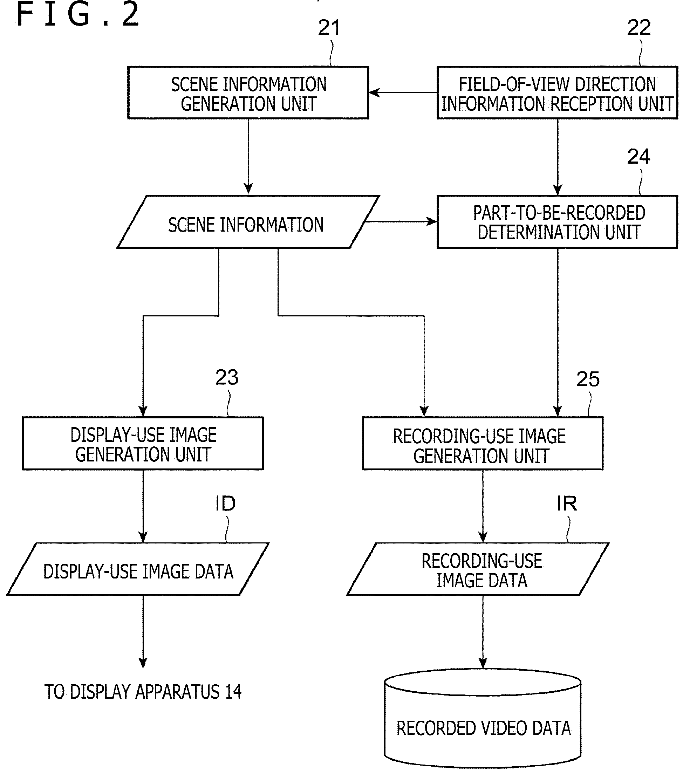

   FIG. 2 is a functional block diagram illustrating functions of the image generation apparatus according to the embodiment of the present invention.
[FIG. 3]

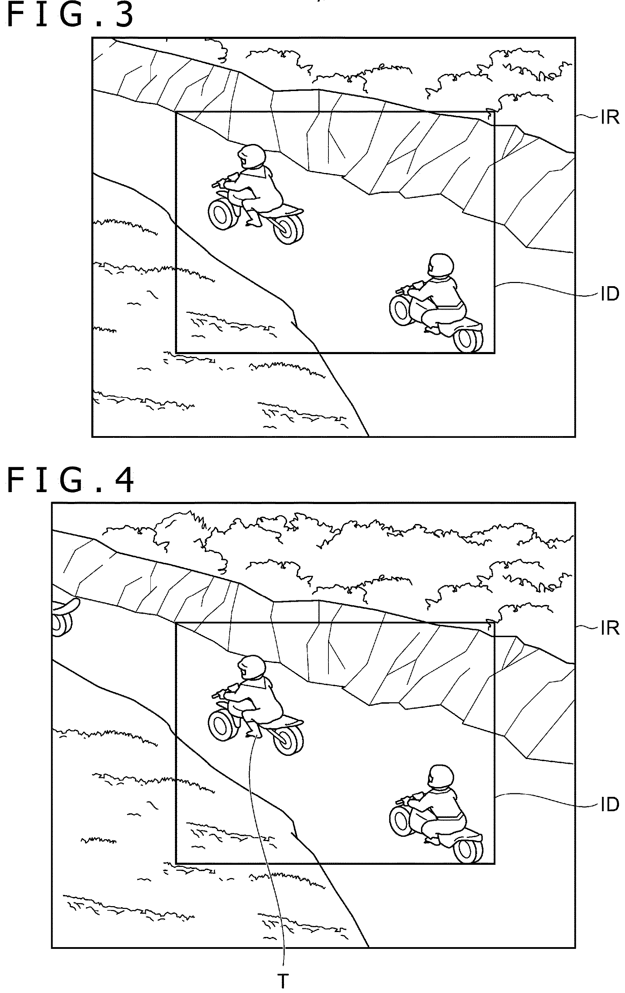

   FIG. 3 is a view illustrating an example of a part to be recorded.
[FIG. 4]
   FIG. 4 is a view illustrating another example of the part to be recorded.
[FIG. 5]

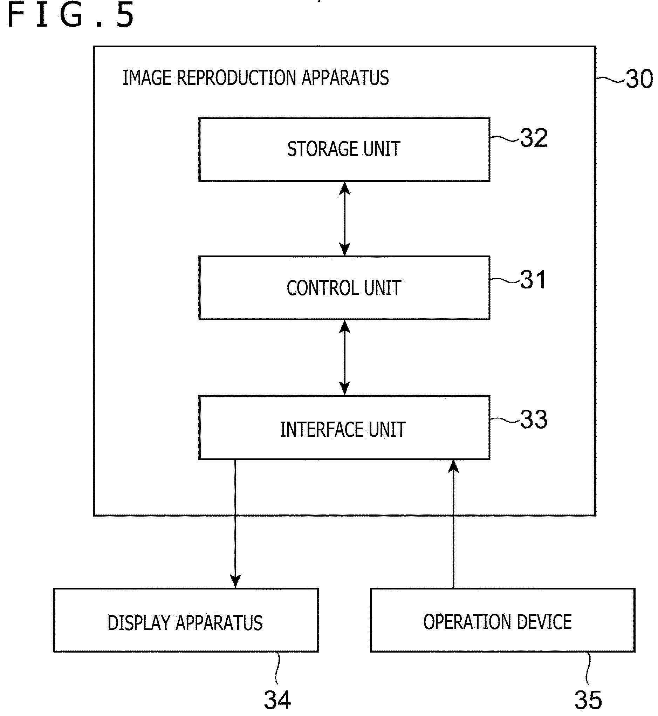

   FIG. 5 is a configuration block diagram illustrating a configuration of an image reproduction apparatus according to the embodiment of the present invention.
[FIG. 6]

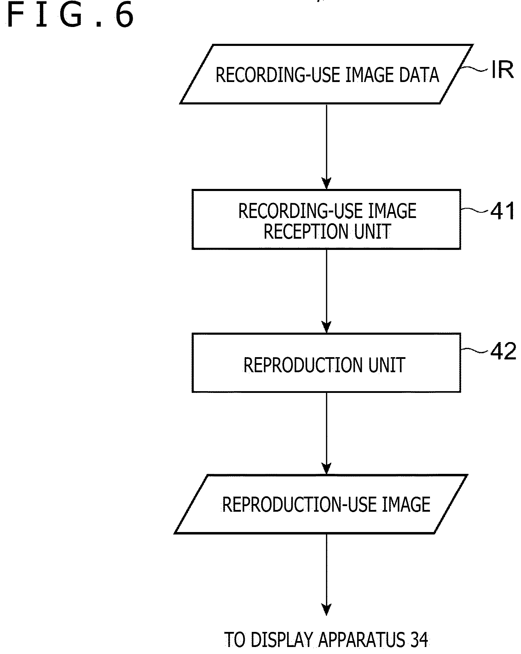

   FIG. 6 is a functional block diagram illustrating functions of the image reproduction apparatus according to the embodiment of the present invention.

### [Description of Embodiment]

Now, an embodiment of the present invention is described in detail with reference to the drawings.

FIG. 1 is a configuration block diagram illustrating a configuration of an image generation apparatus 10 according to the embodiment of the present invention. As described later, the image generation apparatus 10 is used to generate videos to be presented to a user of the image generation apparatus 10, and to record video data corresponding to the presented videos. In the following, the user who uses the image generation apparatus 10 is referred to as a recording user. For example, the image generation apparatus 10 is a home game console, a handheld game console, a personal computer, or the like. As illustrated in FIG. 1, the image generation apparatus 10 includes a control unit 11, a storage unit 12, and an interface unit 13. Further, the image generation apparatus 10 is connected to a display apparatus 14 and an operation device 15.

The control unit 11 includes at least one processor such as a central processing unit (CPU) and executes programs stored in the storage unit 12, to execute various types of information processing. Note that specific examples of processing that the control unit 11 executes in the present embodiment are described later. The storage unit 12 includes at least one memory device such as a random access memory (RAM) and stores programs that the control unit 11 executes and data to be processed by the programs.

The interface unit 13 is an interface for data communication with the display apparatus 14 and the operation device 15. The image generation apparatus 10 is connected to each of the display apparatus 14 and the operation device 15 by wired or wireless connection through the interface unit 13. Specifically, the interface unit 13 is assumed to include a multimedia interface for transmitting video signals supplied from the image generation apparatus 10, to the display apparatus 14. Further, the interface unit 13 includes a data communication interface for receiving signals indicating the content of operations performed by the recording user on the operation device 15. Moreover, the interface unit 13 may include a communication interface for transmitting and receiving data to and from other communication equipment via a communication network such as the Internet.

The display apparatus 14 displays, on a screen, videos based on video signals supplied from the image generation apparatus 10. In the present embodiment, in particular, the display apparatus 14 is assumed to be a head-mounted display apparatus capable of presenting stereoscopic video by presenting different videos to the respective left and right eyes of the recording user. Further, in the present embodiment, the display apparatus 14 is assumed to include an attitude sensor for detecting changes in its attitude. This attitude sensor may be an acceleration sensor, a gyroscope sensor, a geomagnetic sensor, or the like.

The operation device 15 is, for example, a controller of a home game console or the like and receives operation input from the recording user. The operation device 15 is connected to the image generation apparatus 10 by wired or wireless connection and transmits operation signals indicating the content of the operation input received from the recording user to the image generation apparatus 10. Note that the operation device 15 may take various shapes, such as a device that the recording user uses by holding it by hand or a device that the recording user uses by wearing it on the hand, for example.

Now, functions that the image generation apparatus 10 achieves are described using a functional block diagram of FIG. 2. As illustrated in FIG. 2, the image generation apparatus 10 functionally includes a scene information generation unit 21, a field-of-view direction information reception unit 22, a display-use image generation unit 23, a part-to-be-recorded determination unit 24, and a recording-use image generation unit 25. These functions are achieved by the control unit 11 operating in accordance with one or a plurality of programs stored in the storage unit 12. These programs may be provided to the image generation apparatus 10 via a communication network such as the internet, or may be stored in a computer-readable information storage medium such as an optical disc to be provided.

The scene information generation unit 21 determines the content of a scene to be presented to the recording user and generates scene information for identifying the content. The scene information generation unit 21 may be achieved by an application program such as a game program, for example.

In the present embodiment, the scene to be presented to the recording user is assumed to depict the state of the interior of a virtual three-dimensional space (virtual space). In this case, the scene information generation unit 21 determines, as the scene information, information for identifying the shapes and appearances of objects arranged in the virtual space, the positions in the virtual space thereof, and the like.

Moreover, the scene information generation unit 21 is assumed to also determine information for identifying a part of the scene determined by the scene information that is to be actually displayed. Specifically, the scene information generation unit 21 determines a viewpoint position and a field-of-view direction set in the virtual space, on the basis of field-of-view direction information received by the field-of-view direction information reception unit 22 described below.

The field-of-view direction information reception unit 22 receives field-of-view direction information regarding the orientation of the face of the recording user. In the present embodiment, the field-of-view direction information reception unit 22 receives information indicating the detection result of the attitude sensor from the display apparatus 14 and identifies, on the basis of the detection result, information indicating how the orientation of the display apparatus 14 worn on the head of the recording user has changed, as the field-of-view direction information. The scene information generation unit 21 is assumed to change the field-of-view direction set in the virtual space, in conjunction with this field-of-view direction information. Accordingly, for example, when the recording user turns the face to the right, the video displayed on the display apparatus 14 also changes to depict the state on the right side of the front, which has been depicted so far, in the virtual space, thereby allowing the recording user to watch the video displayed on the display apparatus 14, as if he/she were directly looking around in the virtual space.

The display-use image generation unit 23 generates display-use image data ID on the basis of scene information generated by the scene information generation unit 21. The display-use image generation unit 23 may be achieved by such a program as a rendering engine, which is different from the application program for achieving the scene information generation unit 21. The display-use image generation unit 23 generates, on the basis of the scene information, the display-use image data ID representing the state in the virtual three-dimensional space viewed from a viewpoint position and a field-of-view direction specified by the scene information generation unit 21. This display-use image data ID is image data representing a part of the scene (state of the virtual three-dimensional space) represented by the scene information provided by the scene information generation unit 21. Note that, since the display apparatus 14 presents images to the respective right and left eyes of the recording user, the display apparatus 14 generates images for the right eye and images for the left eye. In the following, for convenience of description, a description only regarding images for one of the eyes is given, but the image generation apparatus 10 may execute similar processing for both right eye-use images and left eye-use images.

The display-use image generation unit 23 transmits a video signal including the generated display-use image data ID to the display apparatus 14. Accordingly, the display-use image is displayed on the screen of the display apparatus 14 and presented to the recording user. The image generation apparatus 10 according to the present embodiment can repeatedly execute generation processing of scene information by the scene information generation unit 21, generation processing of the display-use image data ID by the display-use image generation unit 23, and the transmission processing of the display-use image data ID to the display apparatus 14 at a given frame rate, thereby causing the display apparatus 14 to display a video depicting the state of the virtual space that changes over time.

The part-to-be-recorded determination unit 24 determines a part to be recorded (hereinafter referred to as a part to be recorded), in a case where, when the display-use image generation unit 23 generates the display-use image data ID on the basis of scene information provided by the scene information generation unit 21, image data based on the scene information is also recorded. This part to be recorded is a part at least partially overlapping with the display-use image data ID. That is, both the image data to be recorded (hereinafter referred to as recording-use image data IR) and the display-use image data ID are image data depicting the content of the same scene determined by the same scene information, and are data regarding images drawn for parts at least partially overlapping with each other.

As a typical example, the part-to-be-recorded determination unit 24 determines, as the part to be recorded, a part that is at least a part of the scene determined by the scene information generated by the scene information generation unit 21, that includes the entire display-use image data ID, and that is wider than the display-use image data ID. FIG. 3 is a view illustrating an example of a method of determining such a part to be recorded. FIG. 3 illustrates a relation between the display-use image data ID and the recording-use image data IR. In the example of FIG. 3, the part to be recorded is determined such that the recording-use image data IR includes the entire display-use image data ID and includes the surrounding part of the display-use image data ID by the same width in all up, down, left, and right directions. The part-to-be-recorded determination unit 24 can set the viewpoint position for generating the recording-use image data IR, at a position located at a predetermined distance behind (on the opposite side in the field-of-view direction of) the viewpoint position for generating the display-use image data ID, to thereby include such a part to be recorded, in the recording-use image data IR. In the following, the part of the recording-use image data IR corresponding to the display-use image data ID is referred to as a part to be displayed, and the part excluding the part to be displayed (outer peripheral part surrounding the part to be displayed) is referred to as an extended part. Note that other specific examples of the method of determining a part to be recorded are described later.

The recording-use image generation unit 25 generates image data corresponding to a part to be recorded determined by the part-to-be-recorded determination unit 24, as the recording-use image data IR. The processing of generating the recording-use image data IR may be processing similar to the processing of generating the display-use image data ID by the display-use image generation unit 23, except that the target part is different. The recording-use image generation unit 25 may be achieved by the same program as that for the display-use image generation unit 23. Further, the recording-use image generation unit 25 may execute, during the time when the display-use image generation unit 23 is executing the processing of generating the display-use image data ID, the processing of generating the recording-use image data IR in parallel on the basis of the same scene information. The recording-use image data IR generated by the recording-use image generation unit 25 is subjected to predetermined reproduction processing later.

Here, the recording-use image generation unit 25 is assumed to generate the recording-use image data IR such that the part to be displayed in the recording-use image data IR has the same resolution as that of the display-use image data ID. Since the recording-use image data IR includes a wider range than that of the display-use image data ID, the data size of the recording-use image data IR is larger than that of the display-use image data ID.

The recording-use image generation unit 25 generates, in a case where the recording user gives an instruction to record the recording-use image data IR, for example, the recording-use image data IR over the instructed period. In the following, the period in which the recording-use image data IR is generated is referred to as a recording target period. The recording target period may be a period from a point in time when the recording user gives an instruction to start recording to a point in time when the recording user gives an instruction to end recording, or may be the period from a point in time when the recording user gives an instruction to start recording to a point in time when time determined in advance has elapsed. The recording-use image generation unit 25 generates, each time the display-use image generation unit 23 generates a single piece of the display-use image data ID within the recording target period, a single piece of the recording-use image data IR on the basis of the same scene information.

The recording-use image generation unit 25 stores data including a plurality of pieces of recording-use image data IR generated in chronological order within the recording target period, as recorded video data. Note that the recorded video data may be data including the plurality of pieces of recording-use image data IR in their original format, or may be encoded data encoded by a given video encoding method. The image generation apparatus 10 can upload the stored recorded video data to a predetermined server apparatus in response to, for example, instructions from the recording user or distribute the stored recorded video data in response to requests from other users, thereby making the stored recorded video data available to others. The image reproduction apparatus 30, which is described later, reproduces the content of this recorded video data, thereby allowing other users to watch a video that is the same in terms of the represented scene content and the length as the video displayed on the display apparatus 14 in the recording target period. The details of processing of reproducing the content of recorded video data by the image reproduction apparatus 30 are described later.

Now, several specific examples of the method of determining a part to be recorded by the part-to-be-recorded determination unit 24 are described.

As a first example, the part-to-be-recorded determination unit 24 may determine a part to be recorded, on the basis of the content of scene information. For example, the part-to-be-recorded determination unit 24 may determine the part to be recorded, on the basis of the position and the movement of, among the objects arranged in the virtual space specified by the scene information, an object of interest T, which is assumed to particularly attract the attention of the recording user.

The object of interest T in this example may be an object specified by the scene information generation unit 21. For example, in a video game or the like, an object such as a character to be operated by the recording user is included in the display target in some cases. In this case, the object to be operated by the recording user may be the object of interest T. Further, the scene information generation unit 21 may specify, among the objects to be displayed, an object particularly important for the recording user (for example, an enemy object that the recording user is targeting for an attack) as the object of interest T.

More specifically, for example, the part-to-be-recorded determination unit 24 determines the part to be recorded, such that, while the part to be displayed is included, the object of interest T is present at a position near the center of the recording-use image data IR. As an example, in a case where the object of interest T is present at a position on the right side in the display-use image data ID, the part-to-be-recorded determination unit 24 determines the part to be recorded, such that the part to be displayed is included and the width of the extended part on the right side of the part to be displayed is larger than the default width. At this time, as the position of the object of interest T is closer to the edge portion of the part to be displayed, the width of the extended part in the direction of the edge portion may be larger. Further, in a case where the width of the extended part in a predetermined direction is increased, the width of the extended part in the direction opposite thereto may be decreased from the default width to control the size of the recording-use image data IR to always remain constant. Alternatively, as needed, while the width of the extended part in the predetermined direction may be increased, the widths in other directions may remain at the default width, resulting in the size of the recording-use image data IR changing according to the position of the object of interest T.

FIG. 4 illustrates an example of the part to be recorded determined according to the position of the object of interest T. In the example of FIG. 4, the object of interest T is present at an upper-left position relative to the center of the part to be displayed, and thus, compared to FIG. 3, the left and upper widths of the extended part are large.

The part-to-be-recorded determination unit 24 may determine the part to be recorded, on the basis of not only the position of the object of interest T but also the movement direction of the object of interest T in the virtual space. Specifically, for example, in a case where the object of interest T is moving upward from the viewpoint position, the part-to-be-recorded determination unit 24 determines the part to be recorded, such that the width of the extended part on the upper side of the part to be displayed is large. Moreover, in this case, as the recent movement speed of the object of interest T is higher, the width of the extended part in the movement direction may be larger. Note that the part-to-be-recorded determination unit 24 may determine the part to be recorded, in consideration of both the position and the movement direction of the object of interest T.

Further, the part-to-be-recorded determination unit 24 may change the overall size of the part to be recorded, according to the movement speed of the object of interest T, regardless of the movement direction. In this case, it is assumed that, as the recent movement speed of the object of interest T is higher, the widths of the extended part in all directions are larger.

As a second example, the part-to-be-recorded determination unit 24 may determine a part to be recorded, on the basis of the content of operations by the recording user on the operation device 15. For example, in a case where the recording user performs, on the operation device 15, an operation indicating the left direction, the part to be recorded is determined such that the left width of the extended part is larger than the default width. As in the first example, the width of the extended part in the direction opposite to the direction indicated by the recording user may be smaller than the default width.

Further, in a case where the amounts of operations performed by the recording user are identifiable, the part-to-be-recorded determination unit 24 may determine the extent to which the extended part is widened according to those operation amounts. For example, in a case where the operation device 15 is provided with a tilting operation member capable of indicating directions by being tilted, the part-to-be-recorded determination unit 24 may determine the part to be recorded, such that, as the amount of tilt of the tilting operation member by the recording user is larger, the width of the extended part is larger.

Further, the part-to-be-recorded determination unit 24 may change the size of the part to be recorded, simply according to the operation frequency or the magnitude of operation amount, regardless of the operation direction of the recording user. For example, the part-to-be-recorded determination unit 24 may increase the overall size of the part to be recorded, as the number of times or the magnitude of the operation amount of a predetermined operation performed within a predetermined period in the recent past increases.

As a third example, the part-to-be-recorded determination unit 24 may determine a part to be recorded, on the basis of field-of-view direction information regarding the recording user received by the field-of-view direction information reception unit 22. For example, it is assumed that, in a case where the orientation of the face of the recording user changes over time, the part-to-be-recorded determination unit 24 increases the width of the extended part corresponding to the direction of the change. Further, the width of the extended part may be changed according to the speed of change in the orientation of the face. As a specific example, in a case where the recording user is moving his/her face to the left, the part to be recorded is determined such that the left width of the extended part is larger as the magnitude of that movement is larger. Further, as in the first example and the second example described above, the size of the part to be recorded may be changed according to, regardless of the change direction of the orientation of the face, the magnitude of the speed of change.

As a fourth example, the part-to-be-recorded determination unit 24 may determine a part to be recorded, on the basis of the point of gaze of the recording user. In this example, the field-of-view direction information reception unit 22 receives not only field-of-view direction information regarding the orientation of the face of the recording user but also information indicating at which position in the image displayed on the display apparatus 14 the recording user is looking (point-of-gaze information). The point of gaze of the recording user can be identified by methods involving, for example, capturing the pupils of the recording user with an internal camera provided to the display apparatus 14 and analyzing the movement of the pupils included in the captured image.

Using this point-of-gaze information, the part-to-be-recorded determination unit 24 determines the part to be recorded, such that the position at which the recording user is looking (that is, the position at which the recording user is gazing) is close to the center. For example, in a case where it is identified that the recording user is looking at a position corresponding to the lower-left part of the part to be displayed, the part-to-be-recorded determination unit 24 determines the part to be recorded, such that the left and lower widths of the extended part are large. Accordingly, the position at which the recording user is looking is close to the center of the recording-use image data IR.

Further, as in the first example paying attention to the object of interest T and the third example paying attention to the field-of-view direction, the part-to-be-recorded determination unit 24 may determine the position and the size of the part to be recorded, according to the movement direction and the movement speed of the point of gaze. Specifically, for example, the part-to-be-recorded determination unit 24 may increase the width of the extended part based on the recent movement direction of the point of gaze, or may increase the size of the part to be recorded, as the movement speed of the point of gaze increases.

Note that the above-described various methods of determining a part to be recorded may be used in combination. For example, the position of the part to be recorded may be determined in consideration of both the position of the object of interest T and the field-of-view direction of the recording user.

Further, when generating and recording the recording-use image data IR, the recording-use image generation unit 25 may also record at least some of information indicating the position of the object of interest T, information indicating the content of operations performed by the recording user, field-of-view direction information and point-of-gaze information regarding the recording user, and the like. These pieces of information are utilized when the content of the recorded video data is reproduced. Note that the recording-use image generation unit 25 may also record information not utilized to determine the part to be recorded, among these pieces of information. In particular, the field-of-view direction information sequentially received by the field-of-view direction information reception unit 22 over the recording target period is recorded together with the recording-use image data IR, thereby enabling the easy achievement of reproduction processing considering changes in the field-of-view direction during reproduction processing described later.

Next, the reproduction processing using the recording-use image data IR generated by the image generation apparatus 10 is described. In the following, an information processing apparatus configured to execute this reproduction processing is referred to as the image reproduction apparatus 30, and the user who watches a video reproduced using the image reproduction apparatus 30 is referred to as a viewing user. As illustrated in FIG. 5, the image reproduction apparatus 30 includes a control unit 31, a storage unit 32, and an interface unit 33, and is connected to a display apparatus 34 and an operation device 35 via the interface unit 33. These hardware configurations may be similar to those of the image generation apparatus 10. However, the display apparatus 34 may not necessarily be an apparatus that the user uses by wearing it on the head and may be, for example, a stationary display apparatus such as a home television receiver or a portable display apparatus. Note that the image generation apparatus 10 that has generated recorded video data itself may function as the image reproduction apparatus 30.

Now, functions that the image reproduction apparatus 30 achieves are described. As illustrated in FIG. 6, the image reproduction apparatus 30 functionally includes a recording-use image reception unit 41 and a reproduction unit 42. These functions are achieved by the control unit 31 of the image reproduction apparatus 30 executing programs stored in the storage unit 32.

The recording-use image reception unit 41 receives the recording-use image data IR generated and recorded by the image generation apparatus 10 together with the facial expression-use image data ID. Specifically, the image reproduction apparatus 30 may acquire the recording-use image data IR by reading out the recorded video data stored in the image reproduction apparatus 30 through downloading or the like in advance, or may receive the recording-use image data IR by receiving the recording-use image data IR distributed in real-time from a server apparatus via a communication network such as the Internet.

The reproduction unit 42 uses the recording-use image data IR received by the recording-use image reception unit 41, to reproduce the video.

However, the reproduction unit 42 does not display the entire recording-use image data IR on the screen of the display apparatus 34 as it is, but transmits an image of a partial region extracted from the recording-use image data IR to the display apparatus 34 as a reproduction-use image and causes the display apparatus 34 to display the reproduction-use image on the screen. Note that the reproduction-use image to be extracted may be an image of the same size as that of the display-use image data ID. As described so far, the recording-use image data IR regards a wider range than that of the display-use image data ID, and hence, the reproduction unit 42 can extract an image that has the same size and resolution as those of the display-use image data ID and at least partially overlaps with the display-use image data ID, as the reproduction-use image.

Specifically, the reproduction unit 42 refers to, among the series of pieces of recording-use image data IR recorded in chronological order, the predetermined number of pieces of recording-use image data IR recorded before and after the recording-use image data IR to be extracted, thereby detecting the movement of the field-of-view direction made when the recording-use image data IR has been generated. Such processing of detecting the movement of a field-of-view direction may be achieved using known methods used for moving image encoding and the like.

Further, the reproduction unit 42 identifies a region to be extracted as the reproduction-use image from the recording-use image data IR to be extracted, such that, in the detected movement of the field-of-view direction, fine changes that cause motion sickness are canceled out. For example, the reproduction unit 42 determines, as the extraction target, a region corresponding to a direction obtained by averaging field-of-view directions in a predetermined period which is before and after the timing of interest. Alternatively, a region corresponding to the middle position between the field-of-view directions detected before and after the timing of interest may be determined as the extraction target.

By determining a position for extracting the reproduction-use image from each of the plurality of pieces of recording-use image data IR included in the recorded video data, such that fine changes in the field-of-view direction are reduced as described above, the image reproduction apparatus 30 can reproduce the video recorded in a manner that makes the viewing user less likely to get motion sickness.

Moreover, the reproduction unit 42 may not only reduce the movement of the field-of-view direction made when the recording-use image data IR has been recorded but also determine the extraction position of the reproduction-use image in consideration of the orientation of the face of the viewing user. In this case, it is assumed that the display apparatus 34 is of a type of a display apparatus that the viewing user uses by wearing it on the head, like the display apparatus 14, and that the image reproduction apparatus 30 receives field-of-view direction information regarding the orientation of the face of the viewing user, like the field-of-view direction information reception unit 22 of the image generation apparatus 10. Further, the reproduction unit 42 identifies the extraction position of the reproduction-use image according to changes in the field-of-view direction information regarding the viewing user. As described so far, the recording-use image data IR includes a wider range than that of the display-use image data ID, and hence, with such a method, within the range covered by the recording-use image data IR, the viewing user can also watch the state in a direction different from the direction at which the recording user has been looking. Further, regardless of the type of the display apparatus 34, the reproduction unit 42 may change the extraction position of the reproduction-use image in real-time according to, for example, the content of instruction operations executed by the viewing user on the operation device 35.

Note that the reproduction unit 42 may determine the position for extracting the reproduction-use image, by various methods, including but not limited to the examples described so far. Now, several specific examples of the method of determining the position for extracting a reproduction-use image by the reproduction unit 42 are described.

As a first example, the reproduction unit 42 may refer to the field-of-view direction information recorded together with the recording-use image data IR, to determine the extraction position of a reproduction-use image. In this example, the recording-use image generation unit 25 is assumed to record the field-of-view direction information used when the display-use image data ID is generated, together with the recording-use image data IR. By referring to this field-of-view direction information, the reproduction unit 42 can identify the movement of the field-of-view direction without performing the field-of-view direction movement detection processing as described above.

Thus, compared to the case where the reproduction unit 42 itself executes such movement detection processing, fine changes in the field-of-view direction can be reduced accurately with a small amount of calculation.

As a second example, the reproduction unit 42 may refer to the position of the object of interest T to determine the extraction position of a reproduction-use image. In this example, information indicating the position of the object of interest T is assumed to be recorded together with the recording-use image data IR. Specifically, for example, the reproduction unit 42 determines the extraction position of the reproduction-use image in consideration of the past positions of the object of interest T such that the display position of the object of interest T does not change significantly. Further, the extraction position of the reproduction-use image may be determined such that the position of the object of interest T is located at a position near the center in the reproduction-use image. The extraction position is determined using as a reference the position of the object of interest T included in the recording-use image data IR in this way, thereby enabling the prevention of drastic changes in the position of the object of interest T in the reproduced video or enabling the display of the object of interest T at a position near the center of the screen. Thus, the viewing user can more easily follow the movement of the object of interest T. Note that, when the part to be recorded is determined in consideration of the position, the movement direction, and the movement speed of the object of interest T as described above, it is easier to perform extraction of a reproduction-use image focusing on the object of interest T as described above.

As a third example, the reproduction unit 42 may refer to operation information regarding the recording user to determine the extraction position of a reproduction-use image. In this example, the operation information indicating the content of operations performed by the recording user on the operation device 15 is assumed to be recorded together with the recording-use image data IR. In this example, the reproduction unit 42 determines the extraction position according to, for example, the content of direction indication operations performed by the recording user. Accordingly, as in the case where the extraction position is determined according to the movement of the object of interest T, the extraction position of the reproduction-use image can be determined to follow the direction indicated by the recording user. For example, in a case where an object that moves according to instruction operations by the recording user is included in the part to be displayed, with such processing, it can be expected that, even in a case where the reproduction unit 42 has not been able to identify that object, the display position of that object does not change significantly or the object continues to be displayed at a specific position. Note that, in a case where the part to be recorded is determined according to the operation information regarding the user as described above, it is easier to perform extraction of a reproduction-use image focusing on operation information as described above.

As a fourth example, the reproduction unit 42 may refer to information regarding the point of gaze of the recording user to determine an extraction position. Also in this case, as with the object of interest T in the second example, information indicating the position of the point of gaze is assumed to be recorded together with the recording-use image data IR. The reproduction unit 42 refers to this point-of-gaze information to determine the extraction position of the reproduction-use image such that the position of the point of gaze does not change significantly, or that the point of gaze is located at a position near the center in the reproduction-use image. Accordingly, the viewing user can easily confirm the place at which the recording user has been gazing. Note that, in a case where the part to be recorded is determined in consideration of the position, the movement direction, and the movement speed of the point of gaze as described above, it is easier to perform extraction of a reproduction-use image focusing on a point of gaze as described above.

As a fifth example, the reproduction unit 42 may extract the part to be displayed included in the recording-use image data IR, as the reproduction-use image, according to instructions from the viewing user. As described so far, the part to be displayed of the recording-use image data IR has the content corresponding to the display-use image data ID actually referred to by the recording user. Thus, by extracting the part to be displayed, as it is, and displaying, as the reproduction-use image, the part to be displayed, the image reproduction apparatus 30 can reproduce a video with the same content as that of the video watched by the recording user.

The image reproduction apparatus 30 may switch, according to instructions from the viewing user, between the processing of reproducing a video corresponding to the display-use image data ID as described in this fifth example and the processing of reproducing a video in which the movement of the field-of-view direction is reduced as described so far.

Note that, in a case where the position of the part to be displayed included in the recording-use image data IR is always fixed as exemplified in FIG. 3, the reproduction unit 42 can obtain the same image as that corresponding to the display-use image data ID by extracting the image at that position. On the other hand, in a case where the part-to-be-recorded determination unit 24 determines the part to be recorded, on the basis of information regarding the object of interest T, operation information, field-of-view direction information, or point-of-gaze information regarding the recording user, or the like, the position of the part to be displayed included in the recording-use image data IR is not fixed. In this case, the recording-use image generation unit 25 may also record, when generating and recording the recording-use image data IR, information indicating the position, in the recording-use image data IR, of the part to be displayed. By referring to such information indicating the position of the part to be displayed, the reproduction unit 42 can determine the part to be displayed, as the extraction target. Alternatively, the recording-use image generation unit 25 may record information regarding the object of interest T, operation information, field-of-view direction information, or point-of-gaze information regarding the recording user, or the like referred to by the part-to-be-recorded determination unit 24 when determining the part to be recorded, together with the recording-use image data IR. In this case, the reproduction unit 42 can perform processing similar to that performed by the part-to-be-recorded determination unit 24 when, by referring to the recorded information, determining the part to be recorded, thereby identifying the part to be displayed included in the recording-use image data IR.

Moreover, the reproduction unit 42 may superimpose a given direction guidance image for guiding a field-of-view direction on the reproduction-use image extracted from the recording-use image data IR, to thereby include this direction guidance image in the display target of the display apparatus 34. This guidance image may be, for example, an arrow image indicating a direction.

Specifically, for example, the reproduction unit 42 is assumed to refer to the field-of-view direction information recorded together with the recording-use image data IR and include, in the display target, a direction guidance image indicating the direction of change of that field-of-view direction. As an example, it is assumed that, when the reproduction-use image extracted from the recording-use image data IR recorded during a change of the orientation of the face of the recording user from the front to the left is displayed, a direction guidance image indicating the left direction is also displayed. Accordingly, the viewing user can realize in which direction the video he/she is currently watching is changing. In particular, in a case where the extraction position from the recording-use image data IR is determined according to changes in the orientation of the face of the viewing user, thereby displaying a video in conjunction with the orientation of the face of the viewing user, as described above, the viewing user can change the orientation of his/her face to the direction indicated by the direction guidance image, thereby watching a video that changes in a manner similar to that of the video that the recording user has been watching. Note that, here, the direction guided by the direction guidance image is assumed to be determined on the basis of the field-of-view direction information recorded together with the recording-use image data IR, but the present embodiment is not limited to this. Also in a case where chronological changes in the recording-use image data IR are analyzed to detect the movement of the field-of-view direction, the direction guided by the direction guidance image may be determined according to this detection result.

Further, in a case where the reproduction unit 42 determines the extraction position from the recording-use image data IR in conjunction with changes in the orientation of the face of the viewing user, the reproduction unit 42 may display a direction guidance image indicating the field-of-view direction of the recording user itself. For example, in a case where the extraction position of the reproduction-use image is determined using the recording-use image data IR recorded in a state where the recording user is looking straight ahead, even when the orientation of the face of the viewing user deviates from the front direction, as long as the orientation is within the range included in the recording-use image data IR, the extraction position can be determined according to the orientation of the face of the viewing user, and the extracted reproduction-use image can be displayed. However, when the orientation of the face of the viewing user deviates significantly from the front direction, there is a risk that the orientation gets out of the range included in the recording-use image data IR, making it impossible to change the field of view in conjunction with the orientation of the face of the viewing user. Thus, the reproduction unit 42 is assumed to display, in a case where the field-of-view direction of the viewing user deviates by a predetermined amount or more from the field-of-view direction of the recording user identified by the field-of-view direction information, a direction guidance image for guiding the field-of-view direction of the recording user. In this way, the viewing user can recognize the need to return the orientation of his/her face to the direction guided by the direction guidance image.

As described above, with the image generation apparatus 10 according to the present embodiment, the display-use image data ID is generated, and the recording-use image data IR at least partially overlapping with the display-use image data ID is generated on the basis of the same scene information, thereby making it possible to reproduce later a video of the same scene as that of the video watched by the recording user, in a manner that is easier for the viewing user to watch, such as a manner that is less likely to cause motion sickness or a manner that makes it easier to confirm the object of interest.

Note that embodiments of the present invention are not limited to the one described above. For example, in the above description, it is assumed that the display apparatus 14 includes the attitude sensor, and that the field-of-view direction information reception unit 22 receives field-of-view direction information indicating the orientation of the face of the recording user identified on the basis of the detection result of the attitude sensor. However, the method of identifying the orientation of the face of the recording user is not limited to this. The field-of-view direction information reception unit 22 may receive field-of-view direction information identified by various methods. For example, the field-of-view direction information reception unit 22 may receive field-of-view direction information identified by analyzing a captured image captured from a location away from the display apparatus 14, to detect the movement of the display apparatus 14, or analyzing a captured image taken by a camera disposed on the display apparatus 14 itself, to detect the movement of the display apparatus 14.

Further, in the above description, the display apparatus 14 is assumed to be a display apparatus that the user can wear on the head to watch stereoscopic video, but the embodiments of the present invention are not limited to this. Even in a case where the display apparatus 14 is a stationary display apparatus or the like, in a case where the field-of-view direction set in the virtual space changes finely according to, for example, the content of operations by the recording user on the operation device 15, when watching that video as it is later, the viewing user may feel motion sickness due to the unpredictable movements. In such a case, the image of the part to be recorded including the part to be displayed is generated and recorded as the recording-use image data IR as described above, thereby enabling a video of the same scene to be reproduced later in a manner that reduces changes in the field-of-view direction. Further, the recording-use image data IR including the part to be recorded determined in consideration of the position of the object of interest T or the like is generated, thereby enabling a video focusing on the object of interest T to be reproduced later.

Further, in the above description, it is assumed that the image generation apparatus 10 always determines a range that includes the entire part to be displayed and is wider than that of the part to be displayed, as the part to be recorded, and that the image reproduction apparatus 30 extracts a part of the recording-use image data IR as the reproduction-use image. However, the embodiments of the present invention are not limited to this. The image generation apparatus 10 may identify a part to be utilized as the reproduction-use image, at the time of generating the recording-use image data IR, and may generate the recording-use image data IR including only that part.

Specifically, in this embodiment, the part-to-be-recorded determination unit 24 determines the part to be recorded, by processing similar to the processing of determining an extraction position, which is assumed to be executed by the reproduction unit 42 in the description above. More specifically, for example, the part-to-be-recorded determination unit 24 determines, on the basis of field-of-view direction information obtained in the recent past, the part to be recorded, such that fine changes in the field-of-view direction are reduced. Alternatively, the part-to-be-recorded determination unit 24 may determine the part to be recorded, such that the position of the object of interest T is located at a position near the center. At this time, the part-to-be-recorded determination unit 24 determines the part to be recorded, such that the part to be recorded at least partially overlaps with the part to be displayed corresponding to the display-use image data ID and has the same size as that of the part to be displayed. The recording-use image generation unit 25 generates image data regarding the part to be recorded determined in this way, as the recording-use image data IR. Since the recording-use image data IR generated in this way does not necessarily include the entire display-use image data ID, a video equivalent to the video watched by the recording user cannot be reproduced later, unlike the fifth example of the reproduction processing described above. However, in this example, the reproduction unit 42 of the image reproduction apparatus 30 does not need to determine the extraction position of the reproduction-use image, and the content of the recorded video data can be reproduced by processing similar to that for general video data.

Further, in the above description, the image generation apparatus 10 is assumed to be an information processing apparatus that is present at a position relatively close to the recording user and that is directly connected to the display apparatus 14 and the operation device 15. However, the embodiments of the present invention are not limited to this. In services called cloud gaming services, for example, instead of a client apparatus directly connected to the display apparatus 14 and the operation device 15 used by the recording user, a server apparatus connected to the client apparatus via a communication network generates images to be displayed on the screen of the display apparatus 14, in some cases. In such a case, the server apparatus connected, via the communication network, to the client apparatus used by the recording user may function as the image generation apparatus 10 of the present invention. In this case, information regarding operations performed on the operation device 15, field-of-view direction information regarding the user, and the like acquired by the client apparatus are transmitted to the image generation apparatus 10 via the communication network. The image generation apparatus 10 generates the display-use image data ID on the basis of the received information and transmits the display-use image data ID to the client apparatus. Then, the client apparatus causes the received display-use image data ID to be displayed on the screen of the display apparatus 14. On the other hand, as described so far, the image generation apparatus 10 generates the recording-use image data IR together with the display-use image data ID. The generated recording-use image data IR may be stored in the image generation apparatus 10 itself or transmitted to the client apparatus to be stored in the client apparatus.

Similarly, the image reproduction apparatus 30 may be a server apparatus connected, via a communication network, to a client apparatus to which the display apparatus 34 and the operation device 35 used by the viewing user are directly connected. In this case, the reproduction unit 42 of the image reproduction apparatus 30 transmits, via the communication network, the reproduction-use image extracted from the recording-use image data IR to the client apparatus used by the viewing user. The client apparatus causes the received reproduction-use image to be displayed on the screen of the display apparatus 34, thereby allowing the viewing user to watch a video based on the recorded video data.

The present disclosure may include the following aspects.

### [Item 1]

An image generation apparatus including:
one or more processors,
in which the one or more processors
generate, on the basis of scene information, image data representing a part of a scene represented by the scene information, as display-use image data,
determine, as a recording target, a part that is at least a part of the scene and at least partially overlaps with the display-use image data, and
generate, as recording-use image data, image data regarding a part that is at least a part of the scene and has been determined as the recording target, and
the recording-use image data generated is subjected to predetermined reproduction processing.

### [Item 2]

The image generation apparatus according to item 1,
in which the one or more processors determine, as the recording target, a part that is at least the part of the scene, that includes the display-use image data, and that is wider than the display-use image data.

### [Item 3]

The image generation apparatus according to item 2,
in which the one or more processors determine, as the recording target, a part that is at least the part of the scene and that includes a part corresponding to the display-use image data, on the basis of information regarding an object included in the scene information.

### [Item 4]

The image generation apparatus according to item 2,
in which the one or more processors
receive an operation from a user who refers to the display-use image data, and
determine, as the recording target, a part that is at least the part of the scene and that includes a part corresponding to the display-use image data, on the basis of content of the operation received.

### [Item 5]

The image generation apparatus according to item 2,
in which the one or more processors
receive field-of-view direction information regarding an orientation of a face of a user who refers to the display-use image data, and determine a part that includes at least the part of the scene and that includes a part corresponding to the display-use image data, by using the field-of-view direction information.

### [Item 6]

The image generation apparatus according to any one of items 1 to 5, in which one or more processors sequentially acquire and record field-of-view direction information regarding an orientation of a face of a user who refers to the display-use image data, and
the field-of-view direction information sequentially received is subjected to reproduction processing of the recording-use image data.

### [Item 7]

An image reproduction apparatus including:
one or more processors,
in which the one or more processors
receive recording-use image data generated on the basis of scene information together with display-use image data representing a part of a scene represented by the scene information, the recording-use image data including a part that is at least a part of the scene and corresponds to the display-use image data, and
reproduce the recording-use image data received, and the image reproduction apparatus acquires field-of-view information regarding a field of view of a viewer who watches a video obtained by reproducing the recording-use image data, and extracts and displays at least a part of the recording-use image data on the basis of the field-of-view information.

### [Item 8]

An image generation method including:
generating, on the basis of scene information, image data representing a part of a scene represented by the scene information, as display-use image data;
determining, as a recording target, a part that is at least a part of the scene and at least partially overlaps with the display-use image data; and
generating, as recording-use image data, image data regarding a part that is at least a part of the scene and has been determined as the recording target,
in which the recording-use image data generated is subjected to predetermined reproduction processing.

### [Item 9]

A computer-readable non-transitory information storage medium that stores a program for causing a computer to execute processing of:
generating, on the basis of scene information, image data representing a part of a scene represented by the scene information, as display-use image data;
determining, as a recording target, a part that is at least a part of the scene and at least partially overlaps with the display-use image data; and
generating, as recording-use image data, image data regarding a part that is at least a part of the scene and has been determined as the recording target,
in which the recording-use image data generated is subjected to predetermined reproduction processing.

### [Reference Signs List]

- 10:: Image generation apparatus
- 11:: Control unit
- 12:: Storage unit
- 13:: Interface unit
- 14:: Display apparatus
- 15:: Operation device
- 21:: Scene information generation unit
- 22:: Field-of-view direction information reception unit
- 23:: Display-use image generation unit
- 24:: Part-to-be-recorded determination unit
- 25:: Recording-use image generation unit
- 30:: Image reproduction apparatus
- 31:: Control unit
- 32:: Storage unit
- 33:: Interface unit
- 34:: Display apparatus
- 35:: Operation device
- 41:: Recording-use image reception unit
- 42:: Reproduction unit

## Claims

1. An image generation apparatus comprising:
a display-use image generation unit configured to generate, on a basis of scene information, image data representing a part of a scene represented by the scene information, as display-use image data;
a determination unit configured to determine, as a recording target, a part that is at least a part of the scene and at least partially overlaps with the display-use image data; and
a recording-use image generation unit configured to generate, as recording-use image data, image data regarding a part that is at least a part of the scene and has been determined as the recording target,
wherein the recording-use image data generated is subjected to predetermined reproduction processing.

2. The image generation apparatus according to claim 1,
wherein the determination unit determines, as the recording target, a part that is at least the part of the scene, that includes the display-use image data, and that is wider than the display-use image data.

3. The image generation apparatus according to claim 2,
wherein the determination unit determines, as the recording target, a part that is at least the part of the scene and that includes a part corresponding to the display-use image data, on a basis of information regarding an object included in the scene information.

4. The image generation apparatus according to claim 2, further comprising:
an operation reception unit configured to receive an operation from a user who refers to the display-use image data,
wherein the determination unit determines, as the recording target, a part that is at least the part of the scene and that includes a part corresponding to the display-use image data, on a basis of content of the operation received by the operation reception unit.

5. The image generation apparatus according to claim 2, further comprising:
a field-of-view direction reception unit configured to receive field-of-view direction information regarding an orientation of a face of a user who refers to the display-use image data,
wherein the determination unit determines a part that includes at least the part of the scene and that includes a part corresponding to the display-use image data, by using the field-of-view direction information.

6. The image generation apparatus according to any one of claims 1 to 5, further comprising:
a field-of-view direction reception unit configured to sequentially acquire and record field-of-view direction information regarding an orientation of a face of a user who refers to the display-use image data,
wherein the field-of-view direction information sequentially received is subjected to reproduction processing of the recording-use image data.

7. An image reproduction apparatus comprising:
a recording-use image data reception unit configured to receive recording-use image data generated on a basis of scene information together with display-use image data representing a part of a scene represented by the scene information, the recording-use image data including a part that is at least a part of the scene and corresponds to the display-use image data; and
a reproduction unit configured to reproduce the recording-use image data received by the recording-use image data reception unit,
wherein the reproduction unit acquires field-of-view information regarding a field of view of a viewer who watches a video obtained by reproducing the recording-use image data, and extracts and displays at least a part of the recording-use image data on a basis of the field-of-view information.

8. An image generation method comprising:
a step of generating, on a basis of scene information, image data representing a part of a scene represented by the scene information, as display-use image data;
a step of determining, as a recording target, a part that is at least a part of the scene and at least partially overlaps with the display-use image data; and
a step of generating, as recording-use image data, image data regarding a part that is at least a part of the scene and has been determined as the recording target,
wherein the recording-use image data generated is subjected to predetermined reproduction processing.

9. A program for causing a computer to execute:
a step of generating, on a basis of scene information, image data representing a part of a scene represented by the scene information, as display-use image data;
a step of determining, as a recording target, a part that is at least a part of the scene and at least partially overlaps with the display-use image data; and
a step of generating, as recording-use image data, image data regarding a part that is at least a part of the scene and has been determined as the recording target,
wherein the recording-use image data generated is subjected to predetermined reproduction processing.
